(19) **Europäisches Patentamt European Patent Office Office européen des brevets**

(11) **EP 4 297 972 B1**

(12) **EUROPEAN PATENT SPECIFICATION**

(45) Date of publication and mention of the grant of the patent:
**19.02.2025 Bulletin 2025/08**

(21) Application number: **22702238.1**

(22) Date of filing: **26.01.2022**

(51) International Patent Classification (IPC):
*B32B 27/32* (2006.01)    *B33Y 10/00* (2015.01)
*C08L 23/12* (2006.01)    *B29C 64/118* (2017.01)
*B29C 64/245* (2017.01)    *B32B 9/00* (2006.01)
*B32B 15/085* (2006.01)    *B32B 15/20* (2006.01)
*B32B 17/10* (2006.01)    *B32B 27/08* (2006.01)
*B33Y 30/00* (2015.01)    *B33Y 70/00* (2020.01)
*B33Y 80/00* (2015.01)

(52) Cooperative Patent Classification (CPC):
(C-Sets available)
**B33Y 80/00; B29C 64/118; B29C 64/245;
B32B 9/005; B32B 15/085; B32B 15/20;
B32B 17/10; B32B 27/08; B32B 27/32;
B33Y 10/00; B33Y 30/00; B33Y 70/00; C08L 23/12;**
C08L 2203/16; C08L 2205/03      (Cont.)

(86) International application number:
**PCT/EP2022/051689**

(87) International publication number:
**WO 2022/179788 (01.09.2022 Gazette 2022/35)**

(54) **PRINTING PLATFORM FOR EXTRUSION ADDITIVE MANUFACTURING**

DRUCKPLATTFORM ZUR GENERATIVEN FERTIGUNG DURCH EXTRUSION

PLATEFORME D'IMPRESSION POUR FABRICATION ADDITIVE PAR EXTRUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 EP 21159520**

(43) Date of publication of application:
**03.01.2024 Bulletin 2024/01**

(73) Proprietors:
- **Basell Polyolefine GmbH
  50389 Wesseling (DE)**
- **Albert-Ludwigs-Universität Freiburg
  79098 Freiburg (DE)**

(72) Inventors:
- **SCHIRMEISTER, Carl Gunther
  79211 Denzlingen (DE)**
- **LICHT, Erik Hans
  55128 Mainz (DE)**

- **SCHMITZ, Karsten
  65719 Hofheim / Ts. (DE)**
- **KESSLER, Yannic
  65830 Kriftel (DE)**
- **KLEMM, Klaus
  55131 Mainz (DE)**
- **ROHRMANN, Jürgen
  65779 Kelkheim (DE)**
- **LANGENFELDER, Dieter
  65527 Niedernhausen (DE)**
- **DUREEV, Mikhail
  35510 Butzbach (DE)**
- **MUELHAUPT, Rolf
  79117 Freiburg (DE)**
- **MÜLLER, Mirco
  75181 Pforzheim (DE)**
- **PETER, Steer
  80686 München (DE)**
- **BENJAMIN, Kolano
  81375 München (DE)**

**(Cont. next page)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 3 650 496**    **WO-A1-2017/221801**
**WO-A1-2018/065244**    **WO-A2-2014/105466**

(52) Cooperative Patent Classification (CPC): (Cont.)

C-Sets
**C08L 23/12, C08L 51/06, C08L 61/28**

**Description**

FIELD OF THE INVENTION

The present disclosure relates to the use of a specific polyolefin blend as printing platform for an extrusion-based additive manufacturing process.

BACKGROUND OF THE INVENTION

3D printing of plastic materials is a fast-evolving technology. In 3D printing, also referred to as additive manufacturing, the movement of a printing head with respect to the substrate is performed under computer control, in accordance with build data that represent the 3D article to be printed. The build data are obtained by slicing the digital representation of the 3D article into multiple horizontal layers. Then, for each layer, the computer generates a build path to form the 3D article.

Various technologies have been developed for the additive manufacturing of plastic objects, such as extrusion-based processes, powder bed fusion, selective laser sintering, etc.

Extrusion-based additive manufacturing is 3D printing process in which the molten plastic material is selectively dispensed through a nozzle or an orifice. The extrusion-based 3D printing process can be a filament-based process, in which the plastic material is fed to the 3D printer in the form of a filament, or a pellet-based process, wherein the plastic material is fed to the printing device in pelletized form.

The first layer of the printed plastic material solidifies and bonds to the printing platform of the 3D printer. The bond between the printed plastic material and the printing platform should be sufficiently strong to hold the material in place, preventing any displacement during the addition of the subsequently printed layers.

Insufficient adhesion of the printed material to the printing platform can lead to premature detachment and/or slippage of the printed layers, resulting in a flawed structure of the printed article.

In contrary, a strong adhesion between the printed material and the printing platform can prevent premature detachment of the material from the plate. Furthermore, a sufficient adhesion of printed material can prevent warping due to thermal shrinkage, which causes especially the corners of printed articles to lift and detach from the printing platform, leading to deformation of the articles.

At the completion of the printing process, the 3D printed article is generally removed from the printing platform. The easier the printed plastic material can be removed from the printing platform, the less the 3D printed article will be deformed or damaged by removal.

Typically printing platforms are made of glass or metal. Different flexible materials and coatings are known in the art for use as printing plates to cover the printing platform of 3D printers, the flexible material or coating being specifically adapted to the plastic material to be printed onto it.

Disadvantageously, a change of printing material brings about a change of the printing plate material or coating. Furthermore, some printing plates or coatings are sticky and leave sticky residues on printed articles, which must be laboriously removed.

Polyolefins, such as polypropylene and polyethylene, are emerging as printing materials in extrusion-based additive manufacturing. Developing a suitable printing plate, with a good balance adhesion/detachability, that performs also at elevated temperatures on heated printing platforms, is particularly challenging because printed articles obtained from polyolefins generally have a pronounced tendency to warp and therefore require strong adhesion of the printed article to the printing plate.

Printing plates based on 1-butene copolymers with ethylene and/or higher alpha-olefins and suitable for use with a printing material based on polypropylene, nylon, ABS or PLA are known from the international patent application WO2018/065243.

The international patent application WO2018/065244 discloses a printing plate comprising a propylene-based heterophasic composition, the plate being suitable for printing material based on polypropylene, nylon, ABS or PLA.

In this context, there is still a need of a printing plate for extrusion-based additive manufacturing having an optimized balance adhesion/detachability, i.e. securing a good adhesion between the printing plate and printed material and being easily removable from the printed article, without deforming the article and/or without leaving sticky residues on it.

SUMMARY OF THE INVENTION

The present disclosure provides the use of film or sheet comprising a polymer blend obtained by melt blending a mixture comprising:

(A) 60% to 98.8 % by weight of a polyolefin;
(B) 0.1% to 30 % by weight of at least one compatibilizer; and
(C) 0.05% to 20 % by weight of an amino resin,
(D) 0% to 5% by weight of at least one additive,

wherein the amounts of (A), (B), (C) and (D) are based on the total weight of (A)+(B)+(C)+(D), the total weight being 100%
as printing plate in an extrusion-based additive manufacturing process.

In a further aspect, the present disclosure provides an extrusion-based additive manufacturing process comprising selectively depositing a molten thermoplastic material (P) on a film or sheet according to the present disclosure.

In a further aspect, the present disclosure refers to a 3D printing kit comprising:

(K1) a thermoplastic material (P) suitable for extrusion-based additive manufacturing; and
(K2) a printing plate comprising or consisting of a film or sheet according to the present disclosure.

When used as printing plate in a extrusion-based 3D printing process, the film or sheet secures the stability of different types of printing material on the printing platform, in particular of printing materials comprising a polyolefin.

Moreover, the film or sheet is easily removable (peelable) from the printed article, without deforming the article and/or without leaving tacky residues on it.

While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the following detailed description is to be regarded as illustrative in nature and not restrictive.

DETAILED DESCRIPTION OF THE INVENTION

In the context of the present disclosure;

- the percentages are expressed by weight, unless otherwise specified;
- when the term "comprising" is referred to a polymer or to a polymer composition, mixture or blend, it should be construed to mean "comprising or consisting essentially of";
- the term "consisting essentially of" means that, in addition to those components which are mandatory, other components may also be present in a polymer or in a polymer composition, mixture or blend, provided that the essential characteristics of the polymer or of the composition, mixture or blend are not materially affected by their presence. Examples of components that, when present in customary amounts, do not materially affect the characteristics of a polymer or of a polyolefin composition, mixture or blend are catalyst residues, antistatic agents, melt stabilizers, light stabilizers, antioxidants and antiacids;
- a "film" is thin layer of material having thickness equal to or lower than 5000 $\mu$m;
- a "sheet" is a layer of material more than 5000 $\mu$m thick;
- "additive manufacturing" and "3D printing" are synonyms; and
- the "top layer" of a multilayer article is the layer onto which the printing material is deposited in 3D printing.

The component (A) is preferably selected from propylene homopolymers, propylene copolymers and propylene heterophasic polymers. More preferably, component (A) is a propylene polymer selected from propylene homopolymers or propylene copolymers with at least one alpha-olefin of formula $CH_2$=CHR, where R is H or a linear or branched C2-C8 alkyl, the copolymer comprising up to 6.0% by weight, preferably 0.5-6.0% by weight, more preferably 0.5-5.0% by weight, based on the weight of (A), of units deriving from the alpha-olefin.

The alpha-olefin is preferably selected from the group consisting of ethylene, butene-1, hexene-1, 4-methyl-pentene-1, octene-1 and combinations thereof, ethylene being the most preferred.

In a preferred embodiment, the component (A) is a propylene homopolymer.

The component (A), in particular the propylene homopolymer, has at least one of the following properties:

- MFR(A) determined according to the method ISO 1133 (230°C, 2.16kg) ranging from 0.5 to 200 g/10min., preferably from 1 to 100 g/10min., more preferably from 3 to 70 g/10 min., still more preferably from 5 to 30 g/10min.; and/or
- comprises an amount of fraction soluble in xylene at 25°C XS(A) lower than 12.0% by weight, preferably lower than 10.0% by weight, more preferably lower than 5.0% by weight, still more preferably lower than 3.0% by weight, based on the weight of the component (A); and/or

- tensile modulus at 23°C, measured according to the method DIN EN ISO 527-1, -2 ranging from 1200 to 2000 MPa, preferably from 1300 to 1600 MPa.

More preferably, the component (A), in particular the propylene homopolymer, is endowed with all the properties above.

Polyolefins suitable for use as component (A) are available on the market and can be obtained by polymerizing the relevant monomers in the presence a catalyst selected from metallocene compounds, highly stereospecific Ziegler-Natta catalyst systems and combinations thereof.

Preferably, the polymerization processes to prepare the component (A) is carried out in the presence of a highly stereospecific Ziegler-Natta catalyst system comprising:

(1) a solid catalyst component comprising a magnesium halide support on which a Ti compound having at least a Ti-halogen bond is present, and a stereoregulating internal donor;

(2) optionally, but preferably, an Al-containing cocatalyst; and

(3) optionally, but preferably, a further electron-donor compound (external donor).

The solid catalyst component (1) preferably comprises $TiCl_4$ in an amount securing the presence of from 0.5 to 10% by weight of Ti with respect to the total weight of the solid catalyst component (1).

The solid catalyst component (1) comprises at least one stereoregulating internal electron donor compound selected from mono or bidentate organic Lewis bases, preferably selected from esters, ketones, amines, amides, carbamates, carbonates, ethers, nitriles, alkoxysilanes and combinations thereof.

Preferred donors are the esters of phthalic acids such as those described in EP45977A2 and EP395083A2, in particular di-isobutyl phthalate, di-n-butyl phthalate, di-n-octyl phthalate, diphenyl phthalate, benzylbutyl phthalate and combinations thereof.

Esters of aliphatic acids can be selected from esters of malonic acids such as those described in WO98/056830, WO98/056833, WO98/056834, esters of glutaric acids such as those disclosed in WO00/55215, and esters of succinic acids such as those disclosed WO00/63261.

Particular type of diesters are those deriving from esterification of aliphatic or aromatic diols such as those described in WO2010/078494 and USP 7,388,061.

In some embodiments, the internal donor is selected from 1,3-diethers such as those described in EP361493, EP728769 and WO02/100904.

Specific mixtures of internal donors, in particular of aliphatic or aromatic mono or dicarboxylic acid esters and 1,3-diethers as disclosed in WO07/57160 and WO2011/061134 can be used as internal donor.

Preferred magnesium halide support is magnesium dihalide.

The amount of internal donor that remains fixed on the solid catalyst component (1) is 5 to 20% by moles, with respect to the magnesium dihalide.

Preferred methods for the preparation of the solid catalyst component (1) are described in EP395083A2.

The preparation of catalyst components according to a general method is described for example in European Patent Applications US4,399,054, US4,469,648, WO98/44009A1 and EP395083A2.

In some embodiments, the catalyst system comprises an Al-containing cocatalyst (2) selected from Al-trialkyls, preferably selected from the group consisting of Al-triethyl, Al-triisobutyl and Al-tri-n-butyl. The Al/Ti weight ratio in the catalyst system is from 1 to 1000, preferably from 20 to 800.

In embodiments, the catalyst system comprises a further electron donor compound (3) (external electron donor) selected among silicon compounds, ethers, esters, amines, heterocyclic compounds, particularly 2,2,6,6-tetramethylpiperidine, and ketones.

Preferred silicon compounds are selected among methylcyclohexyldimethoxysilane (C-donor), dicyclopentyldimethoxysilane (D-donor) and mixtures thereof.

The polymerization, which can be continuous or batch, is carried out in at least one polymerization stage in liquid phase or in gas phase.

The liquid-phase polymerization can be either in slurry, solution or bulk (liquid monomer). This latter technology is the most preferred and can be carried out in various types of reactors such as continuous stirred tank reactors, loop reactors or plug-flow reactors.

The gas-phase polymerization stages can be carried out in gas-phase reactors, such as fluidized or stirred, fixed bed reactors or a multizone reactor as illustrated in EP1012195.

The reaction temperature is comprised in the range from 40°C to 90°C and the polymerization pressure is from 3.3 to 4.3 MPa for a process in liquid phase and from 0.5 to 3.0 MPa for a process in the gas phase.

The molecular weight of the propylene copolymers obtained in the polymerization stages is regulated using chain transfer agents, such as hydrogen or ZnEt$_2$.

In one embodiment, the component (B) is a low molecular weight compound having a polar group, the compound being preferably selected from aminosilanes, epoxysilanes, amidosilanes, acrylosilanes and mixtures thereof, preferably an aminosilane.

In a preferred embodiment, the component (B) comprised in the film or sheet according to the present disclosure is a modified polymer functionalized with polar compounds and, optionally, with a low molecular weight compound having a reactive polar group. Preferably, the modified polymer is an olefin polymer, preferably selected from polyethylenes, polypropylenes and mixtures thereof.

Polypropylenes are preferably selected from propylene homopolymers, propylene copolymers with at least one alpha-olefin of formula CH$_2$=CHR, where R is H or a linear or branched C2-C8 alkyl, and mixtures thereof.

Polyethylenes are preferably selected from HDPE, MDPE, LDPE, LLDPE and mixtures thereof.

The modified olefin polymers are selected from graft copolymers, block copolymers and mixtures thereof.

Preferably, the modified polymers are functionalized with groups derived from polar compounds, including but not limited to acid anhydrides, carboxylic acids, carboxylic acid derivatives, primary and secondary amines, hydroxyl compounds, oxazoline, epoxides, ionic compounds and combinations thereof. Specific examples of said polar compounds are unsaturated cyclic anhydrides, their aliphatic diesters, and diacid derivatives.

Preferably, the component (B) is a polyolefin, preferably selected from polyethylenes, polypropylenes and mixtures thereof, functionalized with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid and mixtures thereof.

In a preferred embodiment, the component (B) is a polyethylene and/or a polypropylene grafted with maleic anhydride (MAH-g-PP and/or MAH-g-PE).

In a further preferred embodiment, the component (B) is a polyethylene and/or a polypropylene grafted with maleic anhydride, having at least one of the following properties:

-   a maleic anhydride graft level equal to or greater than 0.25 wt.%, based on the component (B), preferably equal to or greater than 0.5 wt.%, more preferably of from 0.5 wt.% to 3.0 wt.%; and/or
-   a melt flow rate MFR(B) determined according to the method ISO 1133 (190°C, 2.16kg) ranging from 1.0 g/10min to 50 g/10min; and/or
-   melting temperature determined by DSC equal to or higher than 60°C, preferably from 60°C to 130°C.

In a preferred embodiment, the polyethylene and/or a polypropylene grafted with maleic anhydride has all the properties above.

Modified polymers are known in the art and can be produced by functionalization processes carried out in solution, in the solid state or preferably in the molten state, eg. by reactive extrusion of the polymer in the presence of the grafting compound and of a free radical initiator. Functionalization of polypropylene and/or polyethylene with maleic anhydride is described for instance in EP0572028A1.

Examples of modified polyolefin suitable for use as component (B) are the commercial products Amplify™ TY by The Dow Chemical Company, Exxelor™ by ExxonMobil Chemical Company, Scona® TPPP by Byk (Altana Group), Bondyram® by Polyram Group and Polybond® by Chemtura and combinations thereof.

Amino resins are resins formed by condensation polymerization of compounds containing an amino group and formaldehyde. Preferably, the component (C) is an amino resin containing an amino group selected from primary aliphatic amine, secondary aliphatic amine, cycloaliphatic amine, aromatic amine, polyamines, urea, urea derivatives and mixtures thereof.

More preferably, the component (C) is selected from the group consisting of urea-formaldehyde resins, melamine-formaldehyde resins, melamine-urea copolymer resins and mixtures thereof; even more preferably component (C) is a melamine-formaldehyde resin. Melamine-formaldehyde resins includes modified melamine-formaldehyde resins, such as ether-modified melamine formaldehyde resins.

Preferably, the solubility in water at 25°C of the amino resin, more preferably of the melamine-formaldehyde resin, is equal to or greater than 1% by weight, more preferably equal to or higher than 10% by weight, more preferably equal to or higher than 20% by weight. In one embodiment, the upper limit of the solubility in water is 70% by weight for each lower limit.

The amino resins suitable for use as component (C) are known in the art and obtainable by known condensation processes of the relevant monomers. They are also commercial products present on the market with the tradenames Saduren® marketed by BASF, Maprenal® marketed by Prefere Resins Holding GmbH and Hiperesin marketed by Chemisol Italia Srl.

The component (D) is optionally but preferably present in the polymer blend, and it is preferably selected from the group consisting of antistatic agents, anti-oxidants, slipping agents anti-acids, melt stabilizers, nucleating agents and combinations thereof, of the type used in the polyolefin field.

The amount of component (D) refers to the total amount of the additives comprised in the mixture.

Preferably, the polymer blend is obtained/obtainable by melt blending a mixture comprising:

(A) 65% to 95% by weight, preferably from 70% to 90% by weight, more preferably from 72% to 85% by weight, of a polyolefin;

(B) 5% to 30% by weight, preferably from 10 to 25% by weight, more preferably from 15% to 25% by weight, of at least one compatibilizer;

(C) 0.05% to 10% by weight, preferably from 0.1% to 7% by weight, more preferably from 0.5% to 5% by weight, of an amino resin; and

(D) 0% to 5% by weight, more preferably 0.01% to 4% by weight, more preferably 0.05% to 3% by weight, particularly preferably from 0.06% to 2.5% by weight of at least one additive,

wherein the amounts of (A), (B), (C) and (D) are based on the total weight of (A)+(B)+(C)+(D), the total weight being 100%.

In one embodiment, the polymer blend is obtained/obtainable by melt blending a mixture consisting of components (A), (B), (C) and optionally (D) in the amounts indicated above; preferably the mixture consists of components (A), (B), (C) and (D).

In one embodiment, the film or sheet comprises a polymer blend obtained/obtainable by melt blending a mixture further comprising (E) up to 30% by weight, preferably from 10% to 30% by weight, of an inorganic filler, the amount of (E) being referred to the total weight of (A)+(B)+(C)+(D)+(E), the total weight being 100%.

The inorganic filler is preferably selected from the group consisting of minerals, such as talc and silicoaluminates, glass fibers, glass beads, carbon fibers, natural fibers and mixtures thereof.

In one embodiment, the polymer blend has MFR(TOT) measured according to the method ISO 1133-2:2011 (230°C/2.16 Kg) of less than 100 g/10 min., preferably from 0.1 to 100 g/10min., more preferably from 0.5 to 70 g/10 min.

The melt blending preferably comprises extruding the components (A), (B), (C), and optionally (D) and/or (E), into an extruder operated at a temperature higher than the melting temperature of component (A).

More preferably, the melt blending process comprises the steps of:

(i) provide the components (A), (B), (C), and optionally (D) and/or (E), to an extruder, preferably to a twin-screw extruder;

(ii) heat the components (A), (B), (C), and optionally (D) and/or (E), to a temperature higher than the melting temperature of the component (A), thereby forming a molten polymer blend;

(iii) push the molten polymer blend through a die and solidify the molten polymer blend.

In step (i), the components (A), (B), (C), and optionally (D) and/or (E), are metered to the extruder simultaneously, optionally pre-mixed in the dry state, or sequentially in any order.

Preferably, in step (ii) the components (A), (B), (C), and optionally (D) and/or (E), are heated to a temperature of from 180°C to 270°C, preferably of from 200°C to 250°C. Preferably, the temperature referred to is the temperature of the head zone of the extruder.

The step (iii) preferably comprises pelletizing the molten polymer blend or forming the molten polymer blend into a film or sheet.

In pelletizing, the extrudate exiting the die is cooled to solidification and subsequently cut into pellets or, alternatively, the molten extrudate is cut into pellets as it emerges from the die and the pellets are subsequently cooled. Cutting and cooling can be carried out in water and/or in air.

Alternatively, the molten polymer blend is formed into a film or sheet by cast film/sheet extrusion or blown film/sheet extrusion. In cast film extrusion, the molten polymer blend (extrudate) exiting a linear slit die is cooled to the solid state by contact with chill rolls and wound onto reels. In blown film extrusion, the molten polymer blend (extrudate) exiting an annular die as a tube is cooled by air supplied from the inside of the tube. The inflated air also prevents the film from collapsing.

According to an embodiment, in step (iii) the molten polymer blend is formed into a film or sheet and the melt blending process comprises an additional step (iv) of stretching (orienting) the film or sheet in at least one direction, preferably in two directions (machine and transverse direction). Stretching of the film or sheet in two directions is carried out sequentially, eg. using a tenter frame, or simultaneously, eg. using either a tenter frame or a tubular process.

In one embodiment, the film or sheet for use according to the present disclosure is obtained/obtainable by feeding the pelletized polyolefin blend to an extruder, preferably to a twin screw extruder, remelting the pelletized polyolefin blend and extruding the remolten polyolefin blend through a die, preferably by cast film/sheet extrusion or blown film/sheet extrusion.

The remelting temperature is preferably from 180°C to 270°C, more preferably of from 200°C to 250°C.

In one embodiment, the film or sheet for use according to the present disclosure is a monolayer film or sheet comprising or consisting essentially of or consisting of the polyolefin blend as described above. In one embodiment, the monolayer film or sheet comprises the polyolefin blend. In a further embodiment, the monolayer film or sheet consists of the polyolefin blend.

In one preferred embodiment, the film or sheet for use according to the present disclosure is a monolayer film having thickness of from 1 to 5000 $\mu$m, preferably 10 to 2000 $\mu$m, more preferably 10 to 200 $\mu$m, especially 20 to 80 $\mu$m.

In an alternative embodiment, the film or sheet for use according to the present disclosure is a multilayer article comprising a top layer and a base layer, the top layer comprising or consisting of the polyolefin blend as described above and the base layer comprising or consisting of a material selected from the group consisting of metals, polymers, ceramic, glass and combinations thereof. In one embodiment, the top layer consists of the polyolefin blend as described above and the base layer consists of a material selected from the group consisting of metals, polymers, ceramic, glass and combinations thereof.

In one embodiment, the film or sheet for use according to the present disclosure is a two-layer article consisting of a top layer and a base layer, the top layer comprising or consisting of the polyolefin blend as described above and the base layer comprising or consisting of a material selected from the group consisting of metals, polymers, ceramic, glass and combinations thereof.

In one embodiment, the two-layer article consists of a top layer and a base layer, wherein the top layer consists of the polymer blend as described above and the base layer consists of a material selected from the group consisting of metals, polymers, ceramic, glass and combinations thereof.

In one embodiment, the film or sheet for use according to the present disclosure is a multilayer article, preferably a two-layer article, comprising a top layer and a base layer, wherein the top layer comprises or consists of the polyolefin blend as described above and has thickness of from 1 to 5000 $\mu$m, preferably 10 to 2000 $\mu$m, more preferably 10 to 200 $\mu$m, especially 20 to 80 $\mu$m and the base layer comprises or consists of a material selected from the group consisting of metals, polymers, ceramic, glass and combinations thereof and has thickness of from 3 $\mu$m to 20000 $\mu$m, preferably from 100 $\mu$m to 5000 $\mu$m, depending on the material.

In one embodiment, the multilayer article comprises at least one additional layer, such as a reinforcing layer adhered to the surface of the base layer opposite to the surface onto which the top layer is arranged and/or at least one intermediate layer interposed between the top layer and the base layer.

In the embodiments above, the base layer preferably comprises a thermoplastic polyolefin selected from polyethylene, polypropylene, polybutene-1, polyvinyl chloride, polyether, polyketone, polyetherketone, polyester, polyacrylate, polymethacrylate, polyamide, polycarbonate, polyurethane, polythiophenylene, polybutene terephthalate, polystyrene and mixtures thereof.

Thermoplastic polymers suitable for use in the base layer are known in the art and are available on the market. Preferably, the polyolefin is selected from polypropylene, polyethylene, polybutene-1 and mixtures thereof. More preferably, the polyolefin is a propylene polymer selected from the group consisting of propylene homopolymers, propylene copolymers with at least one alpha-olefin of formula $CH_2=CHR$, where R is H or a linear or branched C2-C8 alkyl and mixtures thereof.

The propylene copolymer is a random propylene copolymer preferably comprising 0.1-15% by weight of the at least one alpha-olefin or an heterophasic propylene polymer comprising a matrix and a dispersed elastomeric phase, wherein the matrix comprises a propylene homopolymer, a random propylene copolymer comprising 0.1-15% by weight of a at least one alpha-olefin of formula $CH_2=CHR$, where R is H or a linear or branched C2-C8 alkyl and mixtures thereof, and the dispersed phase comprises a propylene copolymer comprising 15-80% by weight of monomer units deriving from at least one alpha-olefin of formula $CH_2=CHR$, where R is H or a linear or branched C2-C8 alkyl and mixtures thereof.

The alpha-olefin is preferably selected from ethylene, butene-1, hexene-1, 4-methy-pentene-1, octene-1 and combinations thereof, ethylene being the most preferred.

The thermoplastic polyolefin of the base layer optionally comprises up to 60% by weight, based on the weight of the base layer, preferably 1-60% by weight, of an additive selected from the group consisting of fillers, pigments, dyes, extension oils, flame retardants (e. g. aluminum trihydrate), UV resistants (e. g. titanium dioxide), UV stabilizers, lubricants (e. g., oleamide), antiblocking agents, slip agents, waxes, coupling agents for fillers, and combinations thereof, the additive being known in the polymer compounding art.

In one embodiment, the base layer comprises or consists of a thermoplastic polyolefin, preferably a propylene polymer, and up to 40% by weight, preferably 10-40% by weight, more preferably 20-40% by weight, based on the weight of the base layer, of a mineral filler, more preferably of talc. In one embodiment, the base layer consists of the thermoplastic polymer, preferably of the polyolefin described above. In an embodiment the base layer consists of the thermoplastic polymer, preferably of the polyolefin described above, and the additive.

In the embodiments above, the metal of the base layer is preferably selected from the group consisting of aluminum, copper, iron, steel, titanium, lithium, gold, silver, manganese, platinum, palladium, nickel, cobalt, tin, vanadium, chromium, alloys comprising at least one of said metals (eg. brass), and combinations thereof; more preferably, the base layer comprises or consists of aluminum, particularly preferably the base layer consists of aluminum.

The base layer is preferably in the form of a film, sheet, woven or nonwoven fabric, web or foam, depending on the material.

In one embodiment, the film or sheet for use according to the present disclosure is a two-layer article consisting of a top layer and a base layer, wherein the top layer consists of the polymer blend and the base layer consists of a metal as described above. In this embodiment, the top layer and the base layer preferably have the thickness as described above.

In a particularly preferred embodiment, the film or sheet is a two-layer article consisting of top layer and a base layer, wherein the top layer comprises the polyolefin blend as described above and has thickness of from 10 to 200 $\mu$m, preferably from 20 to 80 $\mu$m, and the base layer consists of an aluminum film having thickness of from 30 to 500 $\mu$m, preferably from 100 to 300 $\mu$m. The handling of the film of this embodiment is improved.

The process to produce the multilayer article is preferably selected from coextrusion, lamination, extrusion lamination, extrusion coating, compression molding, back injection molding, back foaming, back compression molding and combinations thereof, depending on the material of the back layer.

In coextrusion, the multilayer article is formed by cooling an extrudate comprising superimposed melt streams, wherein a first melt stream comprises or consists of the material of the top layer and a second melt stream comprises or consists of the material of base layer, (eg. a thermoplastic or a thermoset polymer).

In lamination, the base layer, eg. a thermoplastic polymer, and the top layer are made to adhere using heated compression rollers.

In extrusion lamination, the top layer and the base layer are laminated with heated compression rollers and, during lamination, a molten polymer is extruded between said layers acting as bonding layer.

In extrusion coating, a molten stream comprising or consisting of the material of the top layer is extruded through an horizontal die and applied onto the moving base layer.

In compression molding, the base layer and the top layer are superimposed and made to adhere and, optionally but preferably shaped, by putting the superimposed films into an open heated cavity of a mold, closing the mold with a plug member and applying pressure.

In back injection molding, the base layer is introduced into an injection mold, the mold is closed and a molten stream comprising or consisting of the polymer blend of the top layer is injected into the mold at a temperature of from 160°C to 270°C and a pressure of from 0.1 to 200 MPa, thereby forming the top layer and bonding the top layer to the base layer. When the base layer comprises or consists of a thermoplastic polymer, the top layer is introduced into an injection mold, the mold is closed and a molten stream comprising or consisting of the material of the base layer is injected into the mold and bonded to the top layer.

The use of the film or sheet as printing plate in an extrusion-based additive manufacturing process comprises selectively depositing a molten thermoplastic material (P) on a film or sheet according to the present disclosure with a 3D printing device.

Therefore, in a further aspect the present disclosure refers to an extrusion-based additive manufacturing process comprising a step of selectively depositing a molten thermoplastic material (P) on a printing plate comprising the film or sheet according to the present disclosure.

The extrusion-based additive manufacturing process preferably comprises the steps of:

(i) placing the film or sheet according to the present disclosure on the printing platform of a 3D printing device, so that the film or sheet can serve as printing plate;
(ii) selectively depositing a molten thermoplastic material (P) on the printing plate, thereby obtaining a 3D printed article; and
(iii) optionally but preferably, removing the printing plate from the 3D printed article.

Before placing the film or sheet of the present disclosure on the printing platform of a 3D printing device, the film or sheet is optionally but preferably cut into pieces of the appropriate dimensions.

The step (i) comprises laying the film or sheet on the printing platform or releasably fixing the film or sheet to the printing platform or coating the printing platform with a continuous layer comprising or consisting of the film or sheet.

Printing platforms of 3D printers are generally made of metal or glass and the film or sheet of the present disclosure may be displaced during printing. Since the stability of the printing surface is of the uttermost importance in a 3D printing process, in a preferred embodiment, the step (i) comprises releasably fixing the film or sheet to the printing platform of the 3D printing device.

Preferably, the film or sheet is releasably fixed to the printing platform by gluing the film or sheet to the printing plate with a releasable adhesive, by vacuum, mechanical or magnetic clamping or by combinations thereof, depending on the material of the printing platform and on the material of the base layer, if present in the film or sheet.

In a preferred embodiment, the step (i) comprises vacuum-clamping the film or sheet of the present disclosure to the printing platform. A vacuum clamping printing platform comprises a vacuum chamber connected to the surface of the platform by holes of variable bore, spacing and geometry. By applying vacuum to the chamber, the film or sheet is retained on the surface of the printing platform. The vacuum ensures that the film or sheet is flat, wrinkle-free and positionally stable during printing.

In one further embodiment, the step (i) comprises coating the printing platform with a continuous layer of the polymer blend as described above, thereby forming a film or sheet. Preferably, the coating is realized by an extrusion-based additive manufacturing process.

Thus, in a further aspect, the present disclosure refers to the use of the polymer blend as described above as printing material (P) in an extrusion-based additive manufacturing process.

Optionally but preferably, the step (i) further comprises heating the printing platform, especially the vacuum-clamping printing platform, to a temperature up to 150°C, preferably up to 130°C. In one embodiment, the lower limit for the heating temperature is of 30°C for each upper limit.

The thermoplastic material (P) of step (ii) is preferably selected from the group consisting of polyolefins, polylactic acid (PLA), polyamides (PA) comprising among others PA6 and PA6,6, polycarbonates (PC), polyurethanes (TPU), polyesters comprising among others polyethylene terephthalates (PET), glycol-modified polyethylene terephthalates (PETG), polyhydroxy butyrate (PHB), polyetherketones comprising among others polyetherketoneketone (PEKK), polyetheretherketone (PEEK), polyacrylates, polymethacrylates, poly(methyl methacrylate), polythiophenylene, acrylonitrile-butadiene-styrene polymers (ABS), acrylonitrile-styrene-acrylate polymers (ASA), the polymer blend as described above, and combinations thereof.

Preferably, the thermoplastic material (P) comprises a propylene polymer and/or an ethylene polymer.

In a preferred embodiment, the thermoplastic material (P) is a polyolefin composition selected from the group consisting of:

(I) a polyethylene composition having a melt flow index MIE at 190°C with a load of 2.16 kg, according to ISO 1133-2:2011, of at least 0.1 g/10 min., preferably at least 0.5 g/10 min., said polyethylene composition (I) comprising:

a1) 1-40% by weight of a polyethylene component having a weight average molar mass Mw, as measured by GPC, equal to or higher than 1,000,000 g/mol;
b1) 1-95 % by weight of a polyethylene component having a Mw value from 50,000 to 500,000 g/mol;
c1) 1-59 % by weight of a polyethylene component having a Mw value equal to or lower than 5,000 g/mol;
wherein the amounts of components a1), b1) and c1) are referred to the total weight of a1) + b1) + c1),

(II) an heterophasic polypropylene composition comprising:

a2) up to 65 wt.% of a propylene homopolymer or a propylene-ethylene copolymer matrix phase, and
b2) up to 35 wt.% of a propylene-ethylene copolymer elastomeric phase
wherein the amounts of components a2) and b2) are referred to the total weight of a2)+b2), the total weight being 100%, and wherein the heterophasic polypropylene composition has a xylene soluble content of from 15 wt.% to 50 wt.%, an intrinsic viscosity of the fraction soluble in xylene at 25°C ranging from 1.5 to 6.0 dl/g, an ethylene content from 10 wt.% to 50 wt.% and a melt flow rate MFR L (ISO 1133, condition L, i.e. 230 °C and 2.16 kg load) of from 0.5 to 100 g/10 min.,

(III) a polypropylene composition comprising:

a3) 20-60 % by weight of an heterophasic propylene copolymer;
b3) 5-33 % by weight of a propylene homopolymer or copolymer, wherein the copolymer comprises up to 5% by weight of an alpha-olefin selected from ethylene, 1-butene, 1-hexene and 1-octene;
c3) 2-15 % by weight of an elastomeric block copolymer comprising styrene;
d3) 4-32 % by weigh of an elastomeric ethylene copolymer;
e3) 5-50 % by weight of an inorganic filler, preferably glass;
f3) 0.1-5 % by weight of a compatibilizer,
wherein the amounts of components a3), b3), c3), d3), e3) and f3) are referred to the total weight of a3), b3), c3), d3), e3) and f3), which amounts to 100 % and wherein the melt flow rate MFR (230°C, load 2.16 kg, measured according to ISO 1133-2:2011) of the polypropylene composition is at least 1.0 g/10 min; and

(IV) combinations thereof.

The polyethylene composition (I) is a multimodal polyethylene composition described in detail in the international patent application WO2020/169423, herein incorporated by reference in its entirety.

The heterophasic polypropylene composition (II) optionally comprises up to 40 % by weight of an inorganic filler c2) and up to 5% by weight of a compatibilizer d2).

The inorganic filler c2) of the composition (II) and the inorganic filler e3) of the composition (III) are preferably independently selected from the group consisting of talc, mica, calcium carbonate, wollastonite, glass, especially glass fibers and glass spheres, carbon and combinations thereof.

The compatibilizer d2) is preferably a polyethylene and/or a polypropylene grafted with maleic anhydride (MAH-g-PP and/or MAH-g-PE).

The heterophasic composition (II) is described in detail in the international patent application PCT/EP2020/077033, herein incorporated by reference in its entirety.

The polypropylene composition (III) is described in detail in the international patent application PCT/EP2020/077034, herein incorporated by reference in its entirety.

The thermoplastic material (P) is fed to the 3D printing device in the form of a filament (filament-based 3D printing process) or of a pellet (pellet-based 3D printing process).

In embodiments, the printing temperature of the thermoplastic polymer (P) in step (ii) is up to 450°C, eg. for PEEK, and depends on the chemical nature of the polymer. The printing temperatures of polyolefins is from 190°C to 260°C.

In one embodiment, the 3D printed article is not removed from the printing plate, eg. for aesthetic reasons, i.e. the optional step (iii) is not present. In this embodiment, the step (ii) further comprises the step of removing the 3D printed article and the printing plate from the printing platform of the printing device (eg. by interrupting the vacuum).

In an alternative embodiment, the optional step (iii) comprises removing the 3D printed article and the printing plate from the printing platform of the printing device (eg. by interrupting the vacuum) and subsequently removing the printing plate from the 3D printed article.

Alternatively, the step (iii) comprises removing the 3D printed article from the printing plate while retaining the printing plate on the printing platform.

The 3D printing plate comprising the film or sheet of the present disclosure has proven to be versatile since it allows secure 3D-printing and easy removal of several thermoplastic printing materials.

In further aspect, the present disclosure refers to a 3D printing kit comprising:

(K1) a thermoplastic material (P) suitable for extrusion-based additive manufacturing; and

(K2) a printing plate comprising or consisting of a film or sheet according to the present disclosure.

Preferably, the component (K1) of the 3D printing kit comprises a thermoplastic polymer (P) as described above, particularly preferably a polyolefin composition selected from the group consisting of the polyolefin composition (I), (II), (III) and (IV) as described above.

The features describing the subject matter of the present disclosure are not inextricably linked to each other. As a consequence, a certain level of preference of one feature does not necessarily involve the same level of preference of the remaining features of the same or different components. It is intended in the present disclosure that any preferred range of features of components from (A) to (D) from which the polyolefin blend is obtained can be combined independently from the level of preference, and that components from (A) to (D) can be combined with any possible additional component, and its features, described in the present disclosure.

## EXAMPLES

The following examples are illustrative only, and are not intended to limit the scope of the disclosure in any manner whatsoever.

CHARACTERIZATION METHODS

The following methods are used to determine the properties indicated in the description, claims and examples.

**Melt Flow Rate:** Determined according to the method ISO 1133 (230°C, 2.16Kg for the thermoplastic polyolefins; 190°C/2.16Kg for the compatibilizer).

**Solubility in xylene at 25°C:** 2.5 g of polymer sample and 250 ml of xylene are introduced in a glass flask equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. The amount of polymer soluble in xylene at 25°C is then calculated. XS(I) and $XS_A$ values are experimentally determined. The fraction of component (B) soluble in xylene at 25°C ($XS_B$) can be calculated from the formula:

$$XS = W(A) \times (XS_A) + W(B) \times (XS_B)$$

wherein W(A) and W(B) are the relative amounts of components (A) and (B), respectively, and W(A)+ W(B)=1.

**C2 content in propylene-ethylene copolymer (II):** $^{13}$C NMR spectra were acquired on a Bruker AV-600 spectrometer equipped with cryoprobe, operating at 160.91 MHz in the Fourier transform mode at 120°C. The peak of the $P_{\beta\beta}$ carbon (nomenclature according to C. J. Carman, R. A. Harrington and C. E. Wilkes, Macromolecules, 10, 3, 536 (1977)) was used as internal reference at 2.8 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove $^1$H-$^{13}$C coupling. 512 transients were stored in 32K data points using a spectral window of 9000 Hz. The assignments of the spectra, the evaluation of triad distribution and the composition were made according to Kakugo [M. Kakugo, Y. Naito, K. Mizunuma and T. Miyatake, Macromolecules, 16, 4, 1160 (1982)]. Owing to the low amount of Propylene inserted as regioirregular units, ethylene content was calculated according to Kakugo [M. Kakugo, Y. Naito, K. Mizunuma and T. Miyatake, Macromolecules, 16, 4, 1160 (1982)] using only triad sequences with P inserted as regular unit.

$$PPP = 100 \; T_{\beta\beta}/S$$

$$PPE = 100 \; T_{\beta\delta}/S$$

$$EPE = 100 \; T_{\delta\delta}/S$$

$$PEP = 100 \; S_{\beta\beta}/S$$

$$PEE = 100 \; S_{\beta\delta}/S$$

$$EEE = 100 \; (0.25 \; S_{\gamma\delta} + 0.5 \; S_{\delta\delta})/S$$

Where $S = T_{\beta\beta} + T_{\beta\delta} + T_{\delta\delta} + S_{\beta\beta} + S_{\beta\delta} + 0.25 \; S_{\gamma\delta} + 0.5 \; S_{\delta\delta}$

**Melting temperature:** by DSC.

**Tensile Modulus:** Determined according to the method ISO 527-1,-2:2019.

**Peel test:** the peel resistance Rpeel of 3D printed test specimens (200 x 15 x 0.8 mm) on the printing plate was determined according to DIN EN 1272 using the test machine ZWICK Z005 with a load cell of 2.5 kN. The 3D printed test specimen was separated from the printing plate along the longest axis by means of a blade, starting from one side over a length of 5 cm. The separated part of the 3D printed test specimens was clamped to the testing machine at an angle of 90° with respect to the printing plate and peeled with a speed of 100 mm/min. For each 3D printed test specimen, the measurements were performed at the a temperature corresponding to the temperature T(p) of the printing plate, straightly after the printing process. A load cell was used to continuously measure the force required to peel off the test specimens from the printing plate. From the plateau (traverse travel between approximately 60 mm and 160 mm) the peel force Fpeel was determined by arithmetically averaging the measured tensile forces in the plateau. The peel resistance Rpeel was calculated according to the formula:

$$R_{peel} \left[ \frac{N}{mm} \right] = \frac{F_{peel}}{b}$$

wherein b is the width of the test specimens (15 mm). Five test specimens were used for each combination 3D printing material/printing plate. The mean value of the Rpeel over five measurements is used as Rpeel value of the test specimen.

RAW MATERIALS:

Moplen HF501N, a propylene homopolymer from LyondellBasell, having a melt flow rate of 12 g/10 min. (ISO1133; 230°C/2.16Kg) and tensile modulus (ISO 527-1,-2:2019) of 1550 MPa.

Amplify TY 1060H marketed by The Dow Chemical Company, a maleic anhydride (MAH) grafted polymer concentrate with MAH grafting level of 0.5-1.0 wt.%, MFR of 3.0 g/10min. (ISO1133; 190°C/2.16Kg) and melting temperature of 62.8°C measured by DSC.

Hiperesin MF 100C a melamine-formaldehyde powder resin obtained from Chemisol Italia having solubility in water in the range 30-65 wt.%.

Irganox® 1010 marketed by BASF, is 2,2-bis[3-[,5-bis(1,1-dimethylethyl)-4-hydroxyphenyl]-1-oxopropoxy] methyl]-1,3-propanediyl-3,5-bis(1,1-dimethylethyl)-4-hydroxybenzene-propanoate.

Irgafos® 168 marketed by BASF is tris(2,4-di-tert.-butylphenyl)phosphite.

3D PRINTING MATERIALS:

The thermoplastic polymer filaments used in 3D printing tests are listed in Table 1.

Table 1

| | |
|---|---|
| PM1 | Ultimaker Tough PLA white |
| PM2 | Ultimaker nylon translucent |
| PM3 | Ultimaker polycarbonate white |
| PM4 | Ultimaker TPU 95A white |
| PM5 | Ultimaker CPE translucent (PETG) |
| PM6 | Ultimaker propylene polymer, natural |
| PM7 | Ultrafuse propylene polymer, natural |
| PM8 | HECO1 |
| PM9 | Hifax TYC 459P C1V301 |
| PM10 | Hostalen GC7260 |

Ultimaker products are marketed by Ultimaker, Nederlands; Ultrafuse is a product marketed by BASF.

HECO1 is a polypropylene compound obtained by melt blending 70 wt.% of Moplen® 2000HEXP, an heterophasic propylene polymer marketed by LyondellBasell, with 25 wt.% of glass fibers (ThermoFlow 636 EC13 4mm) and 5 wt.% of additives.

Hifax® TYC 459P C1V301 is a 21 wt.% talc filled commercial propylene polymer composition sold by LyondellBasell, having MFR (230°C/2.16 Kg) of 27 g/10 min. measured according to ISO 1133-1, flexural modulus (23°C, Tech A) of 2100 MPa measured according to ISO 178/A1 and Charpy impact strength - Notched of 25 kJ/m² at 23°C and of 3.5 kJ/m² at -30°C measured according to ISO 179-1/1eA.

Hostalen® GC7260, marketed by LyondellBasell, is an HDPE having Melt Flow Rate (190°C/2.16 Kg, ISO1133-1) of 8.0 g/10 min and a melting temperature in the range 180°C-250°C.

**Preparation of the film IP1**

A mixture having the following composition:

Table 2

| | | IP1 |
|---|---|---|
| Moplen HF501N | wt.% | 78.8 |
| Amplify TY 1060 | wt.% | 20.0 |
| Hiperesin MF 100C | wt.% | 1.0 |
| Irganox® 1010 | wt.% | 0.1 |

(continued)

| | | IP1 |
|---|---|---|
| Irgafos 168® | wt.% | 0.1 |

was fed to a twin-screw extruder ZSK-25 (Coperion GmbH, Stuttgart, Germany), operating with a throughput of 10 kg/h at 210 °C. The melt was pelletized through a die plate having 4 holes of 2 mm diameter resulting in granules of a polymer blend. The granules of polymer blend were fed to a blown film line (HOSOKAWA ALPINE AG., Augsburg, Germany) equipped with a 55 mm diameter single screw extruder and blown into a film employing a throughput of 40 kg/h and a temperature of 210 °C in the head zone of the extruder. The extruded bubbles had a diameter of 800 mm. The bubbles were cut and the resulting films having a thickness of 40 $\mu$m was wound onto a roll. For use as printing plate, the film was cut into pieces of 25 x 22 cm.

**Preparation of the film IP2**

The film IP1 was laminated to an aluminum foil DPxx (anodized open pored) 200$\mu$m thick, obtained from Alanod GmbH & Co. KG, Germany. The lamination was carried out continuously using a laminator UVL PRO 2911039 from Fetzel Maschinenbau GmbH, Germany with silicone rollers LA60ACO.01 at 170 °C and 15 bar/(m$^2$) surface pressure. The intake speed was 0.2 mm/min. For use as printing plate, the laminate was cut into pieces of size 25 x 22 cm.

**3D printing process**

The 3D printed test specimens (200 x 15 x 0.8 mm) were produced with an Ultimaker 2+ FFF printer using 100% linear infill with $\pm$ 45° angle relative to the longest axis of the specimens, a nozzle of 0.4 mm diameter, a line width of 0.35 mm, and a printing speed of 35 mm/s.

The printing plates were vacuum-clamped onto the printing platform of the printer and 4 layers each 0.2 mm thick were printed superimposed, leading to a test specimen 0.8 mm thick. All test specimens were printed without raft or brim. The nozzle printing temperature (T(n)) and temperature of the printing platform (T(p)) were set according to the specifications of the manufactures to avoid degradation of the printing materials.

Once the printing process was finished, the vacuum was switched off and the 3D printed articles were removed from the printing platform together with the printing plate.

The peel test was carried out immediately after the 3D printed article with the printing plate was removed from the platform.

For each combination of printing material/IP/printing temperature five specimens were printed consecutively and tested.

**Examples E1-E10**

In examples E1-E10 the film IP1 was used as printing plate with the printing materials from PM1 to PM10. The nozzle temperature T(n) and the temperature of the printing platform T(p) used in each test are reported in Table 3.

**Examples E11-E20**

In examples E11-E20 the film IP2 was used as printing plate with the printing materials from PM1 to PM10. The nozzle temperature T(n) and the temperature of the printing platform T(p) used in each test are reported in Table 3.

**Examples E21-E30**

In examples E1-E10 the film IP2 was used as printing plate with the printing materials from PM1 to PM10. The nozzle temperature T(n) and the temperature of the printing platform T(p) used in each test are reported in Table 3.

**Comparative examples CE31-CE40**

In comparative examples CE31-CE40 the printing platform CP1 was used, in which a Ultimaker 2+ glass bed from Ultimaker, Netherlands, was covered with 3DLac adhesive spray for 3D printers obtained from 3DLac, Spain. The same materials from PM1 to PM10 were used for printing. The nozzle temperature T(n) and the temperature of the printing platform T(p) used in each test are reported in Table 4.

**Comparative examples CE41-CE50**

In comparative examples CE41-CE50 the printing platform CP2 was used, in which an Ultimaker adhesion sheet from Ultimaker, Netherlands, was applied on an Ultimaker 2+ glass bed. The same printing materials from PM1 to PM10 were used for printing. The nozzle temperature T(n) and the temperature of the printing platform T(p) used in each test are reported in Table 4.

**Comparative examples CE51-CE60**

In comparative examples CE51-CE60 the printing platform CP3 was used, in which a reinforced adhesive tape from 3M, USA (Scotch Filament Tape 8959), was applied on a Ultimaker 2+ glass bed. The same materials from PM1 to PM10 were used for printing. The nozzle temperature T(n) and the temperature of the printing platform T(p) used in each test are reported in Table 4.

**Comparative examples CE61-CE70**

In comparative examples CE61-CE70 the printing platform CP4 was used, a polypropylene plate with a thickness of 4 mm from Technoplast GmbH, Germany. The same printing materials from PM1 to PM10 were used for printing. The nozzle temperature T(n) and the temperature of the printing platform T(p) used in each test are reported in Table 4.

**Comparative examples CE71-CE80**

In comparative examples CE71-CE80 the printing platform CP5 was used, a polyethylene plate with a thickness of 4 mm from Technoplast GmbH, Germany. The same printing materials from PM1 to PM10 were used for printing. The nozzle temperature T(n) and the temperature of the printing platform T(p) used in each test are reported in Table 4.

The peel resistance values (Rpeel [N/mm] with standard deviation) obtained the peel tests are reported in Tables 5 and 6.

Table 3

|  | IP1 | IP2 | IP2 |
|---|---|---|---|
| PM1 | **E1:** T(n) = 210°C T(p) = 60°C | **E11:** T(n) = 210°C T(p) = 60°C | **E21:** T(n) = 240°C T(p) = 60°C |
| PM2 | **E2:** T(n) = 240°C T(p) = 60°C | **E12:** T(n) = 240°C T(p) = 60°C | **E22-E23:** T(n) = 260°C T(p) = 60°C |
| PM3 | **E3:** T(n) = 250°C T(p) = 60°C | **E13:** T(n) = 250°C T(p) = 60°C | |
| PM4 | **E4:** T(n) = 220°C T(p) = 60°C | **E14:** T(n) = 220°C T(p) = 60°C | **E24:** T(n) = 240°C T(p) = 60°C |
| PM5 | **E5:** T(n) = 235°C T(p) = 60°C | **E15:** T(n) = 235°C T(p) = 60°C | **E25-30:** T(n) = 260°C T(p) = 60°C |
| PM6 | **E6-E10:** T(n) = 210°C T(p) = 60°C | **E16-E20:** T(n) = 210°C T(p) = 60°C | |
| PM7 | | | |
| PM8 | | | |
| PM9 | | | |
| PM10 | | | |

Table 4

| | CP1 | CP2 | CP3 | CP4 | CP5 |
|---|---|---|---|---|---|
| PM1 | **CE31:**<br>T(n) = 210°C<br>T(p) = 60°C | **CE41:**<br>T(n) = 210 °C<br>T(p) = 60 °C | **CE51:**<br>T(n) = 210 °C<br>T(p) = 60 °C | **CE61:**<br>T(n) = 240 °C<br>T(p) = 60 °C | **CE71:**<br>T(n) = 240 °C<br>T(p) = 60 °C |
| PM2 | **CE32:**<br>T(n) = 260°C<br>T(p) = 60°C | **CE42:**<br>T(n) = 260 °C<br>T(p) = 60 °C | **CE52:**<br>T(n) = 260 °C<br>T(p) = 60 °C | **CE62-CE63:**<br><br>T(n) = 260 °C<br><br>T(p) = 60 °C | **CE72-CE73:**<br><br>T(n) = 260 °C<br><br>T(p) = 60 °C |
| PM3 | **CE33:**<br>T(n) = 260 °C<br>T(p) = 110 °C | **CE43:**<br>T(n) = 260 °C<br>T(p) = 110 °C | **CE53:**<br>T(n) = 260 °C<br>T(p) = 110 °C | | |
| PM4 | **CE34:**<br>T(n) = 240 °C<br>T(p) = 70 °C | **CE44:**<br>T(n) = 240 °C<br>T(p) = 70 °C | **CE54:**<br>T(n) = 240 °C<br>T(p) = 70 °C | **CE64:**<br>T(n) = 240 °C<br>T(p) = 60 °C | **CE74:**<br>T(n) = 240 °C<br>T(p) = 60 °C |
| PM5 | **CE35-CE40:** T(n) = 260 °C<br><br>T(p) = 60 °C | **CE45-CE50:** T(n) = 260 °C<br><br>T(p) = 60 °C | **CE55-CE60:** T(n) = 260 °C<br><br>T(p) = 60 °C | **CE65-CE70:** T(n) = 260 °C<br><br>T(p) = 60 °C | **CE75-CE80:** T(n) = 260 °C<br><br>T(p) = 60 °C |
| PM6 | | | | | |
| PM7 | | | | | |
| PM8 | | | | | |
| PM9 | | | | | |
| PM10 | | | | | |

Table 5

| | IP1 | IP2 | IP2 |
|---|---|---|---|
| PM1 | **E1:**<br>0.15 (± 0.05) | **E11:**<br>0.13 (± 0.03) | **E21:**<br>0.29 (± 0.03) |
| PM2 | **E2:**<br>0.52 (± 0.08) | **E12:**<br>0.58 (± 0.09) | **E22:**<br>0.74 (± 0.12) |
| PM3 | **E3:**<br>0.07 (± 0.03) | **E13:**<br>0.072 (± 0.009) | **E23:**<br>0.16 (± 0.02) |
| PM4 | **E4:**<br>0.41 (± 0.06) | **E14:**<br>0.39 (± 0.08) | **E24:**<br>0.46 (± 0.06) |
| PM5 | **E5:**<br>0.091 (± 0.011) | **E15:**<br>0.09 (± 0.02) | **E25:**<br>0.14 (± 0.02) |
| PM6 | **E6:**<br>0.60 (± 0.08) | **E16:**<br>0.52 (± 0.07) | **E26:**<br>2.6 (± 0.3) |
| PM7 | **E7:**<br>0.45 (± 0.10) | **E17:**<br>0.43 (± 0.05) | **E27:**<br>2.5 (± 0.5) |
| PM8 | **E8:**<br>0.40 (± 0.09) | **E18:**<br>0.41 (± 0.06) | **E28:**<br>2.5 (± 0.3) |
| PM9 | **E9:**<br>0.37 (± 0.07) | **E19:**<br>0.41 (± 0.05) | **E29:**<br>1.66 (± 0.11) |
| PM10 | **E10:**<br>0.32 (± 0.04) | **E20:**<br>0.33 (± 0.05) | **E30:**<br>1.5 (± 0.2) |

# EP 4 297 972 B1

Table 6

|  | CP1 | CP2 | CP3 | CP4 | CP5 |
|---|---|---|---|---|---|
| PM1 | **CE31:** 0.33 (± 0.08) | **CE41:** 0.27 (± 0.11) | **CE51:** 0.12 (± 0.03) | **CE61-CE65:** no adhesion | **CE71:** 0.07 (± 0.03) |
| PM2 | **CE32:** 0.26 (± 0.06) | **CE42:** 0.13 (± 0.03) | **CE52:** 0.13 (± 0.04) | | **CE72:** no adhesion |
| PM3 | **CE33:** 0.12 (± 0.02) | **CE43:** 0.11 (± 0.02) | **CE53:** 0.13 (± 0.07) | | **CE73:** no adhesion |
| PM4 | **CE34:** 0.35 (± 0.07) | **CE44:** 0.51 (± 0.05) | **CE54:** 0.13 (± 0.05) | | **CE74:** 0.06 (± 0.05) |
| PM5 | **CE35:** 0.09 (± 0.02) | **CE45:** 0.08 (± 0.02) | **CE55:** no adhesion | | **CE75:** no adhesion |
| PM6 | **CE36:** no adhesion | **CE46:** 0.06 (± 0.02) | **CE56:** 0.5 (± 0.3) | **CE66-CE70:** no peeling, specimens rupture | **CE76:** 0.12 (± 0.04) |
| PM7 | **CE37:** no adhesion | **CE47:** 0.07 (± 0.03) | **CE57:** 0.7 (± 0.3) | | **CE77:** 0.13 (± 0.06) |
| PM8 | **CE38:** no adhesion | **CE48:** no adhesion | **CE58:** 0.35 (± 0.10) | | **CE78:** 1.7 (± 0.6) |
| PM9 | **CE39:** no adhesion | **CE49:** no adhesion | **CE59:** 0.16 (± 0.02) | | **CE79:** 1.6 (± 0.5) |
| PM10 | **CE40:** no adhesion | **CE50:** no adhesion | **CE60:** 0.34 (± 0.18) | | **CE80:** no peeling, specimens rupture |

The printing plate of the present disclosure (IP1 and IP2) show adhesion to all investigated thermoplastic polymers in extrusion-based 3D printing, regardless of the polarity of the printing material. In particular, IP1 and IP2 show good adhesion to polyethylene and polypropylene, in contrast to conventional printing platforms.

Besides, the printing plates IP1 and IP2 are removable from the printed object without damaging it and without leaving sticky residues on the object.

## Claims

1. Use of a film or sheet comprising a polymer blend obtained by melt blending a mixture comprising:

(A) 60% to 98.8% by weight, preferably from 65% to 95% by weight, more preferably from 70% to 90% by weight, more preferably from 72% to 85% by weight, of a polyolefin;
(B) 0.1% to 30% by weight, preferably from 5% to 30% by weight, more preferably from 10 to 25% by weight, more preferably from 15% to 25% by weight, of at least one compatibilizer;
(C) 0.05% to 20% by weight, preferably from 0.05% to 10% by weight, more preferably from 0.1% to 7% by weight, more preferably from 0.5% to 5% by weight of an amino resin; and
(D) 0% to 5% by weight, preferably 0.01% to 4% by weight, more preferably 0.05% to 3% by weight, more preferably 0.06% to 2.5 % by weight, of at least one additive,

wherein the amounts of (A), (B), (C) and (D) are based on the total weight of (A)+(B)+(C)+(D), the total weight being 100%,
as printing plate in an extrusion-based additive manufacturing process.

2. The use according to claim 1, wherein the component (A) is a propylene polymer selected from propylene homopolymers or propylene copolymers with at least one alpha-olefin of formula $CH_2=CHR$, where R is H or a linear or branched C2-C8 alkyl, the copolymer comprising up to 6.0% by weight, preferably 0.5-6.0% by weight, more preferably 0.5-5.0% by weight, based on the weight of (A), of units deriving from the alpha-olefin.

3. The use according to claim 1 or 2, wherein the component (B) is a polyolefin, preferably selected from polyethylenes, polypropylenes and mixtures thereof, modified with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid and mixtures thereof; preferably polypropylene and/or polyethylene grafted with maleic anhydride.

4. The use according to anyone of claims 1-3, wherein the component (C) is selected from the group consisting of urea-formaldehyde resins, melamine-formaldehyde resins, melamine-urea copolymer resins and mixtures thereof, preferably is a melamine-formaldehyde resin.

5. The use according to anyone of claims 1-4, wherein the component (D) is selected from the group consisting of antistatic agents, anti-oxidants, slipping agents anti-acids, melt stabilizers, nucleating agents and combinations thereof.

6. The use according to any one of claims 1-5, wherein the film or sheet is a monolayer film, preferably having thickness of from 3 to 5000 $\mu$m, preferably 10 to 2000 $\mu$m, more preferably 10 to 200 $\mu$m, especially 20 to 80 $\mu$m.

7. The use according to anyone of claims 1-5, wherein the sheet is a multilayer article, preferably a two-layer article, comprising a top layer and a base layer, wherein the top layer comprises the polyolefin blend as described in anyone of claims 1-5 and has thickness from 1 to 5000 $\mu$m, preferably from 10 to 2000 $\mu$m, more preferably from 10 to 200 $\mu$m, especially from 20 to 80 $\mu$m and the base layer comprises a material selected from the group consisting of metals, polymers, ceramic, glass and combinations thereof, the base layer having thickness of from 3 $\mu$m to 20000 $\mu$m, preferably from 100 $\mu$m to 5000 $\mu$m.

8. The use according to claim 7, wherein the base layer is a metallic layer comprising a metal selected from the group consisting of aluminum, copper, iron, steel, titanium, lithium, gold, silver, manganese, platinum, palladium, nickel, cobalt, tin, vanadium, chromium, alloys comprising at least one of said metals, and combinations thereof, preferably aluminum.

9. The use according to claim 1, wherein the film or sheet is a two-layer article consisting of a top layer and a base layer, the top layer comprising the polyolefin blend as described in any one of claims 1-5 and has thickness of from 10 to 200 $\mu$m, preferably from 20 to 80 $\mu$m, and the base layer consists of aluminum and has thickness of from 30 to 500 $\mu$m, preferably from 100 to 300 $\mu$m.

10. An extrusion-based additive manufacturing process comprising selectively depositing a molten thermoplastic material (P) on a film or sheet as described in any one of claims 1-9.

11. The extrusion-based additive manufacturing process according to claims 10, comprising the steps of:

(i) placing the film or sheet as described in any one of claims 1-5 on the printing platform of a 3D printing device, so that the film or sheet can serve as printing plate;
(ii) selectively depositing a molten thermoplastic material (P) on the printing plate, thereby obtaining a 3D printed article; and
(iii) optionally but preferably, removing the printing plate from the 3D printed article.

12. The extrusion-based additive manufacturing process according to claim 10 or 11, wherein the thermoplastic material (P) of step (ii) is selected from the group consisting of polyolefins, polylactic acid (PLA), polyamides (PA), polycarbonates (PC), polyurethanes (TPU), polyesters (PE), polyethylene terephthalates (PET), glycol-modified polyethylene terephthalates (PETG), polyhydroxy butyrate (PHB), polyetherketones, polyacrylates, polymethacrylates, poly(methyl methacrylates), polythiophenylene, acrylonitrile-butadiene-styrene polymers (ABS), acrylonitrile-styrene-acrylate polymers (ASA), the polymer blend as described in any one of claims 1-5 and combinations thereof.

13. The extrusion-based manufacturing process according to any one of claims 10-12, wherein the thermoplastic material (P) is a polyolefin composition selected from the group consisting of:

(I) a polyethylene composition having a melt flow index MIE at 190°C with a load of 2.16 kg, according to ISO 1133-2:2011, of at least 0.1 g/10 min., preferably at least 0.5 g/10 min., said polyethylene composition (I) comprising:

EP 4 297 972 B1

a1) 1-40% by weight of a polyethylene component having a weight average molar mass Mw, as measured by GPC, equal to or higher than 1,000,000 g/mol;
b1) 1-95 % by weight of a polyethylene component having a Mw value from 50,000 to 500,000 g/mol;
c1) 1-59 % by weight of a polyethylene component having a Mw value equal to or lower than 5,000 g/mol;
wherein the amounts of components a1), b1) and c1) are referred to the total weight of a1) + b1) + c1);

(II) an heterophasic polypropylene composition comprising:

a2) up to 65 wt.% of a propylene homopolymer or a propylene-ethylene copolymer matrix phase, andb2) up to 35 wt.% of a propylene-ethylene copolymer elastomeric phase,
wherein the amounts of components a2) and b2) are referred to the total weight of a2)+b2), the total weight being 100%, and wherein the heterophasic polypropylene composition has a xylene soluble content of from 15 wt.% to 50 wt.%, an intrinsic viscosity of the fraction soluble in xylene at 25°C ranging from 1.5 to 6.0 dl/g, an ethylene content from 10 wt.% to 50 wt.% and a melt flow rate MFR L (ISO 1133, condition L, i.e. 230 °C and 2.16 kg load) of from 0.5 to 100 g/10 min.;

(III) a polypropylene composition comprising:

a3) 20-60 % by weight of an heterophasic propylene copolymer;
b3) 5-33 % by weight of a propylene homopolymer or copolymer, wherein the copolymer comprises up to 5% by weight of an alpha-olefin selected from ethylene, 1-butene, 1-hexene and 1-octene;
c3) 2-15 % by weight of an elastomeric block copolymer comprising styrene;
d3) 4-32 % by weigh of an elastomeric ethylene copolymer;
e3) 5-50 % by weight of an inorganic filler, preferably glass;
f3) 0.1-5 % by weight of a compatibilizer,
wherein the amounts of components a3), b3), c3), d3), e3) and f3) are referred to the total weight of a3), b3), c3), d3), e3) and f3), which amounts to 100 % and wherein the melt flow rate MFR (230°C, load 2.16 kg, measured according to ISO 1133-2:2011) of the polypropylene composition is at least 1.0 g/10 min; and

(IV) combinations thereof.

14. The extrusion-based additive manufacturing process according to any one of claims 10-13, wherein the thermoplastic polymer (P) is fed to the 3D printing device in the form of a filament or of a pellet.

15. A 3D printing kit comprising:

(K1) a thermoplastic material (P) suitable for extrusion-based additive manufacturing; and
(K2) a printing plate comprising or consisting of a film or sheet as claimed in anyone of claims 1-9.

**Patentansprüche**

1. Verwendung eines Films oder einer Lage, umfassend ein Polymergemisch, das durch Schmelzmischen einer Mischung erhalten wird, welche umfasst:

(A) 60 Gew.% bis 98,8 Gew.%, vorzugsweise 65 Gew.% bis 95 Gew.%, bevorzugter 70 Gew.% bis 90 Gew.%, bevorzugter 72 Gew.% bis 85 Gew.% eines Polyolefins;
(B) 0,1 Gew.% bis 30 Gew.%, vorzugsweise 5 Gew.% bis 30 Gew.%, bevorzugter 10 Gew.% bis 25 Gew.%, bevorzugter 15 Gew.% bis 25 Gew.% von mindestens einem Verträglichmacher;
(C) 0,05 Gew.% bis 20 Gew.%, vorzugsweise 0,05 Gew.% bis 10 Gew.%, bevorzugter 0,1 Gew.% bis 7 Gew.%, bevorzugter 0,5 Gew.% bis 5 Gew.% eines Aminoharzes; und
(D) 0 Gew.% bis 5 Gew.%, vorzugsweise 0,01 Gew.% bis 4 Gew.%, bevorzugter 0,05 Gew.% bis 3 Gew.%, bevorzugter 0,06 Gew.% bis 2,5 Gew.% von mindestens einem Additiv,

wobei die Mengen an (A), (B), (C) und (D) sich auf das Gesamtgewicht von (A)+(B)+(C)+(D) beziehen, wobei das Gesamtgewicht 100 % beträgt,
als Druckplatte in einem generativen Fertigungsverfahren durch Extrusion.

2. Verwendung nach Anspruch 1, wobei die Komponente (A) ein Propylenpolymer ausgewählt aus Propylenhomopolymeren oder Propylencopolymeren mit mindestens einem alpha-Olefin mit der Formel $CH_2=CHR$ ist, wobei R H oder ein lineares oder verzweigtes $C_2$- bis Cs-Alkyl ist, das Copolymer bis zu 6,0 Gew.%, vorzugsweise 0,5 bis 6,0 Gew.%, bevorzugter 0,5 bis 5,0 Gew.%, bezogen auf das Gewicht von (A), von Einheiten umfasst, die von dem alpha-Olefin abgeleitet sind.

3. Verwendung nach Anspruch 1 oder 2, wobei die Komponente (B) ein Polyolefin, vorzugsweise ausgewählt aus Polyethylenen, Polypropylenen und Mischungen davon, modifiziert mit einer Verbindung ausgewählt aus der Gruppe bestehend aus Maleinsäureanhydrid, linearen oder verzweigten $C_1$- bis $C_{10}$-Dialkylmaleaten, linearen oder verzweigten $C_1$- bis $C_{10}$-Dialkylfumaraten, Itaconsäureanhydrid, linearen oder verzweigten $C_1$- bis $C_{10}$-Itacon-säure-dialkylestern, Maleinsäure, Fumarsäure, Itaconsäure und Mischungen davon; vorzugsweise Polypropylen und/oder Polyethylen, gepfropft mit Maleinsäureanhydrid, ist.

4. Verwendung nach einem der Ansprüche 1 bis 3, wobei die Komponente (C) ausgewählt ist aus der Gruppe bestehend aus Harnstoff-Formaldehyd-Harzen, Melamin-Formaldehyd-Harzen, Melamin-Harnstoff-Copolymerharzen und Mischungen davon, vorzugsweise ein Melamin-Formaldehyd-Harz ist.

5. Verwendung nach einem der Ansprüche 1 bis 4, wobei die Komponente (D) ausgewählt ist aus der Gruppe bestehend aus Antistatikmitteln, Antioxidantien, Gleitmitteln, Antisäuren, Schmelzstabilisatoren, Nukleierungsmitteln und Kombinationen davon.

6. Verwendung nach einem der Ansprüche 1 bis 5, wobei der Film oder die Lage ein einschichtiger Film ist, vorzugsweise mit einer Dicke von 3 bis 5000 $\mu$m, vorzugsweise 10 bis 2000 $\mu$m, bevorzugter 10 bis 200 $\mu$m, insbesondere 20 bis 80 $\mu$m.

7. Verwendung nach einem der Ansprüche 1 bis 5, wobei die Lage ein mehrschichtiger Artikel, vorzugsweise ein zweischichtiger Artikel ist, umfassend eine Deckschicht und eine Basisschicht, wobei die Deckschicht das Polyolefingemisch wie in einem der Ansprüche 1 bis 5 beschrieben umfasst und eine Dicke von 1 bis 5000 $\mu$m, vorzugsweise 10 bis 2000 $\mu$m, bevorzugter 10 bis 200 $\mu$m, insbesondere 20 bis 80 $\mu$m aufweist, und die Basisschicht ein Material ausgewählt aus der Gruppe bestehend aus Metallen, Polymeren, Keramik, Glas und Kombinationen davon umfasst, wobei die Basisschicht eine Dicke von 3 $\mu$m bis 20000 $\mu$m, vorzugsweise 100 $\mu$m bis 5000 $\mu$m aufweist.

8. Verwendung nach Anspruch 7, wobei die Basisschicht eine metallische Schicht ist, umfassend ein Metall ausgewählt aus der Gruppe bestehend aus Aluminium, Kupfer, Eisen, Stahl, Titan, Lithium, Gold, Silber, Mangan, Platin, Palladium, Nickel, Kobalt, Zinn, Vanadium, Chrom, Legierungen, die mindestens eines dieser Metalle umfassen, und Kombinationen davon, vorzugsweise Aluminium.

9. Verwendung nach Anspruch 1, wobei der Film oder die Lage ein zweischichtiger Artikel ist, der aus einer Deckschicht und einer Basisschicht besteht, wobei die Deckschicht das Polyolefingemisch wie in einem der Ansprüche 1 bis 5 beschrieben umfasst und eine Dicke von 10 bis 200 $\mu$m, vorzugsweise 20 bis 80 $\mu$m aufweist, und die Basisschicht aus Aluminium besteht und eine Dicke von 30 bis 500 $\mu$m, vorzugsweise 100 bis 300 $\mu$m aufweist.

10. Generatives Fertigungsverfahren durch Extrusion, umfassend selektives Abscheiden eines geschmolzenen thermoplastischen Materials (P) auf einem Film oder einer Lage wie in einem der Ansprüche 1 bis 9 beschrieben.

11. Generatives Fertigungsverfahren durch Extrusion nach Anspruch 10, umfassend die Schritte:

   (i) Platzieren des Films oder der Lage wie in einem der Ansprüche 1 bis 5 beschrieben auf der Druckplattform einer 3D-Druckvorrichtung, so dass der Film oder die Lage als Druckplatte dienen kann;
   (ii) selektives Abscheiden eines geschmolzenen thermoplastischen Materials (P) auf der Druckplatte, wodurch ein 3D-gedruckter Artikel erhalten wird; und
   (iii) gegebenenfalls, jedoch vorzugsweise Entfernen der Druckplatte von dem 3D-gedruckten Artikel.

12. Generatives Fertigungsverfahren durch Extrusion nach Anspruch 10 oder 11, wobei das thermoplastische Material (P) aus Schritt (ii) ausgewählt ist aus der Gruppe bestehend aus Polyolefinen, Polymilchsäure (PLA), Polyamiden (PA), Polycarbonaten (PC), Polyurethanen (TPU), Polyestern (PE), Polyethylenterephthalaten (PET), glykolmodifizierten Polyethylenterephthalaten (PETG), Polyhydroxybutyrat (PHB), Polyetherketonen, Polyacrylaten, Polymethacrylaten, Poly(methylmethacrylaten), Polythiophenylen, Acrylnitril-Butadien-StyrolPolymeren (ABS), Acrylnitril-Styrol-Acrylat-Polymeren (ASA), dem Polymergemisch wie in einem der Ansprüche 1 bis 5 beschrieben sowie Kombinationen davon.

13. Fertigungsverfahren durch Extrusion nach einem der Ansprüche 10 bis 12, wobei das thermoplastische Material (P) eine Polyolefinzusammensetzung ist, die ausgewählt ist aus der Gruppe bestehend aus:

(I) einer Polyethylenzusammensetzung mit einem Schmelzflussindex MIE bei 190 °C unter einer Last von 2,16 kg gemäß ISO 1133-2:2011 von mindestens 0,1 g/10 min, vorzugsweise mindestens 0,5 g/10 min, wobei die Polyethylenzusammensetzung (I) umfasst:

a1) 1 bis 40 Gew.% einer Polyethylenkomponente mit einem durchschnittlichen Molekulargewicht (Gewichtsmittel) Mw, gemessen mittels GPC, gleich oder größer als 1.000.000 g/mol;
b1) 1 bis 95 Gew.% einer Polyethylenkomponente mit einem Mw-Wert von 50.000 bis 500.000 g/mol;
c1) 1 bis 59 Gew.% einer Polyethylenkomponente mit einem Mw-Wert gleich oder
kleiner als 5.000 g/mol;
wobei die Mengen der Komponenten a1), b1) und c1) sich auf das Gesamtgewicht von a1) + b1) + c1) beziehen;

(II) einer heterophasischen Polypropylenzusammensetzung, umfassend:

a2) bis zu 65 Gew.% einer Propylenhomopolymer- oder einer Propylen-Ethylen-Copolymer-Matrixphase und b2) bis zu 35 Gew.% einer Propylen-Ethylen-Copolymer-Elastomerphase,
wobei die Mengen der Komponenten a2) und b2) sich auf das Gesamtgewicht von a2)+b2) beziehen, das Gesamtgewicht 100 % beträgt, und wobei die heterophasische Polypropylenzusammensetzung einen Gehalt an xylollöslichem Material von 15 Gew.% bis 50 Gew.%, eine Grenzviskosität der in Xylol bei 25 °C löslichen Fraktion im Bereich von 1,5 bis 6,0 dl/g, einen Ethylengehalt von 10 Gew.% bis 50 Gew.% und eine Schmelzflussrate MFR L (ISO 1133, Bedingung L, d. h. 230 °C und 2,16 kg Last) von 0,5 bis 100 g/10 min aufweist;

(III) einer Polypropylenzusammensetzung, umfassend:

a3) 20 bis 60 Gew.% eines heterophasischen Propylencopolymers;
b3) 5 bis 33 Gew.% eines Propylenhomopolymers oder -copolymers, wobei das Copolymer bis zu 5 Gew.% eines alpha-Olefins ausgewählt aus Ethylen, 1-Buten, 1-Hexen und 1-Octen umfasst;
c3) 2 bis 15 Gew.% eines Elastomerblockcopolymers, das Styrol umfasst;
d3) 4 bis 32 Gew.% eines Elastomerethylencopolymers;
e3) 5 bis 50 Gew.% eines anorganischen Füllstoffs, vorzugsweise Glas;
f3) 0,1 bis 5 Gew.% eines Verträglichmachers,
wobei die Mengen der Komponenten a3), b3), c3), d3), e3) und f3) sich auf das Gesamtgewicht von a3), b3), c3), d3), e3) und f3) beziehen, die in der Summe 100 % ergeben, und wobei die Schmelzflussrate MFR (230 °C, Last 2,16 kg, gemessen gemäß ISO 1133-2:2011) der Polypropylenzusammensetzung mindestens 1,0 g/10 min beträgt; und

(IV) Kombinationen davon.

14. Generatives Fertigungsverfahren durch Extrusion nach einem der Ansprüche 10 bis 13, wobei das thermoplastische Polymer (P) in Form eines Filaments oder eines Pellets in die 3D-Druckvorrichtung eingespeist wird.

15. 3D-Druck-Kit, umfassend:

(K1) ein thermoplastisches Material (P), das für generative Fertigung durch Extrusion geeignet ist; und
(K2) eine Druckplatte, umfassend oder bestehend aus einem Film oder einer Lage wie in einem der Ansprüche 1 bis 9 beansprucht.

**Revendications**

1. Utilisation d'un film ou d'une feuille comprenant un mélange de polymères obtenu par mélange à l'état fondu d'un mélange comprenant :

(A) 60 % à 98,8 % en poids, de préférence 65 % à 95 % en poids, plus préférablement 70 % à 90 % en poids, plus préférablement 72 % à 85 % en poids, d'une polyoléfine ;
(B) 0,1 % à 30 % en poids, de préférence 5 % à 30 % en poids, plus préférablement 10 à 25 % en poids, plus préférablement 15 % à 25 % en poids, d'au moins un agent de compatibilité ;
(C) 0,05 % à 20 % en poids, de préférence 0,05 % à 10 % en poids, plus préférablement 0,1 % à 7 % en poids, plus préférablement 0,5 % à 5 % en poids, d'une résine amino ; et
(D) 0 % à 5 % en poids, de préférence 0,01 % à 4 % en poids, plus préférablement 0,05 % à 3 % en poids, plus préférablement 0,06 % à 2,5 % en poids, d'au moins un additif,

les quantités de (A), (B), (C) et (D) étant basées sur le poids total de (A)+(B)+(C)+(D), le poids total étant de 100 %,
en tant que plaque d'impression dans un procédé de fabrication additive basé sur une extrusion.

2. Utilisation selon la revendication 1, le constituant (A) étant un polymère de propylène choisi parmi les homopolymères de propylène ou les copolymères de propylène avec au moins une alpha-oléfine de formule $CH_2$=CHR, dans laquelle R représente H ou un alkyle en C2-C8 linéaire ou ramifié, le copolymère comprenant jusqu'à 6,0 % en poids, de préférence 0,5 à 6,0 % en poids, plus préférablement 0,5 à 5,0 % en poids, sur la base du poids de (A), de motifs dérivant de l'alpha-oléfine.

3. Utilisation selon la revendication 1 ou 2, le constituant (B) étant une polyoléfine, de préférence choisie parmi les polyéthylènes, les polypropylènes et leurs mélanges, modifiée par un composé choisi dans le groupe constitué par l'anhydride maléique, les maléates de dialkyle en C1-C10 linéaire ou ramifié, les fumarates de dialkyle en C1-C10 linéaire ou ramifié, l'anhydride itaconique, les esters dialkyliques en C1-C10 linéaires ou ramifiés de l'acide itaconique, l'acide maléique, l'acide fumarique, l'acide itaconique et leurs mélanges ; de préférence le polypropylène et/ou le polyéthylène greffé par l'anhydride maléique.

4. Utilisation selon l'une quelconque des revendications 1 à 3, le constituant (C) étant choisi dans le groupe constitué par les résines d'urée-formaldéhyde, les résines de mélamine-formaldéhyde, les résines de copolymère de mélamine-urée et leurs mélanges et est de préférence une résine de mélamine-formaldéhyde.

5. Utilisation selon l'une quelconque des revendications 1 à 4, le constituant (D) étant choisi dans le groupe constitué par les agents antistatiques, les antioxydants, les agents de glissement, les antiacides, les stabilisants à l'état fondu, les agents de nucléation et leurs combinaisons.

6. Utilisation selon l'une quelconque des revendications 1 à 5, le film ou la feuille étant un film monocouche, présentant de préférence une épaisseur de 3 à 5000 $\mu$m, de préférence de 10 à 2000 $\mu$m, plus préférablement de 10 à 200 $\mu$m, en particulier de 20 à 80 $\mu$m.

7. Utilisation selon l'une quelconque des revendications 1 à 5, la feuille étant un article multicouche, de préférence un article à deux couches, comprenant une couche supérieure et une couche de base, la couche supérieure comprenant le mélange de polyoléfines selon l'une quelconque des revendications 1 à 5 et présentant une épaisseur de 1 à 5000 $\mu$m, de préférence de 10 à 2000 $\mu$m, plus préférablement de 10 à 200 um, en particulier de 20 à 80 $\mu$m et la couche de base comprenant un matériau choisi dans le groupe constitué par les métaux, les polymères, la céramique, le verre et leurs combinaisons, la couche de base présentant une épaisseur de 3 $\mu$m à 20.000 $\mu$m, de préférence de 100 $\mu$m à 5000 $\mu$m.

8. Utilisation selon la revendication 7, la couche de base étant une couche métallique comprenant un métal choisi dans le groupe constitué par l'aluminium, le cuivre, le fer, l'acier, le titane, le lithium, l'or, l'argent, le manganèse, le platine, le palladium, le nickel, le cobalt, l'étain, le vanadium, le chrome, les alliages comprenant au moins l'un desdits métaux et leurs combinaisons, de préférence l'aluminium.

9. Utilisation selon la revendication 1, le film ou la feuille étant un article à deux couches constitué par une couche supérieure et une couche de base, la couche supérieure comprenant le mélange de polyoléfines selon l'une quelconque des revendications 1 à 5 et présentant une épaisseur de 10 à 200 $\mu$m, de préférence de 20 à 80 $\mu$m, et la couche de base étant constituée d'aluminium et présentant une épaisseur de 30 à 500 $\mu$m, de préférence de 100 à 300 $\mu$m.

10. Procédé de fabrication additive basé sur une extrusion comprenant le dépôt sélectif d'un matériau thermoplastique fondu (P) sur un film ou une feuille selon l'une quelconque des revendications 1 à 9.

11. Procédé de fabrication additive basé sur une extrusion selon la revendication 10, comprenant les étapes de :

(i) placement du film ou de la feuille selon l'une quelconque des revendications 1 à 5 sur la plateforme d'impression d'un dispositif d'impression 3D, de telle sorte que le film ou la feuille peut servir de plaque d'impression ;
(ii) dépôt sélectif d'un matériau thermoplastique fondu (P) sur la plaque d'impression, ce qui permet d'obtenir un article imprimé 3D ; et
(iii) éventuellement mais de préférence, retrait de la plaque d'impression de l'article imprimé 3D.

12. Procédé de fabrication additive basé sur une extrusion selon la revendication 10 ou 11, le matériau thermoplastique (P) de l'étape (ii) étant choisi dans le groupe constitué par les polyoléfines, le poly(acide lactique) (PLA), les polyamides (PA), les polycarbonates (PC), les polyuréthanes (TPU), les polyesters (PE), les poly(téréphtalates d'éthylène) (PET), les poly(téréphtalates d'éthylène) modifiés par du glycol (PETG), le polyhydroxybutyrate (PHB), les polyéthercétones, les polyacrylates, les polyméthacrylates, les poly(méthacrylates de méthyle), le polythiophénylène, les polymères d'acrylonitrile-butadiène-styrène (ABS), les polymères d'acrylonitrile-styrène-acrylate (ASA), le mélange de polymères selon l'une quelconque des revendications 1 à 5 et leurs combinaisons.

13. **Procédé** de fabrication basé sur une extrusion selon l'une quelconque des revendications 10 à 12, le matériau thermoplastique (P) étant une composition polyoléfinique choisie dans le groupe constitué par :

(I) une composition de polyéthylène présentant un indice de fluidité à chaud MIE à 190 °C sous une charge de 2,16 kg, selon la norme ISO 1133-2:2011, d'au moins 0,1 g/10 min, de préférence d'au moins 0,5 g/10 min, ladite composition de polyéthylène (I) comprenant :

a1) 1 à 40 % en poids d'un constituant polyéthylène présentant une masse molaire moyenne en poids Mw, telle que mesurée par CPG, égale ou supérieure à 1.000.000 g/mole ;
b1) 1 à 95 % en poids d'un constituant polyéthylène présentant une valeur Mw de 50.000 à 500.000 g/mole ;
c1) 1 à 59 % en poids d'un constituant polyéthylène présentant une valeur Mw égale ou inférieure à 5000 g/mole ;
les quantités des constituants a1), b1) and c1) se rapportant au poids total de a1) + b1) + c1) ;

(II) une composition de polypropylène hétérophasique comprenant :

a2) jusqu'à 65 % en poids d'une phase de matrice d'homopolymère de propylène ou de copolymère de propylène-éthylène et b2) jusqu'à 35 % en poids d'une phase élastomère de copolymère de propylène-éthylène,
les quantités des constituants a2) et b2) se rapportant au poids total de a2)+b2), le poids total étant de 100%, et la composition de polypropylène hétérophasique présentant une teneur soluble dans le xylène de 15 % en poids à 50 % en poids, une viscosité intrinsèque de la fraction soluble dans le xylène à 25 °C située dans la plage de 1,5 à 6,0 dl/g, une teneur en éthylène de 10 % en poids à 50 % en poids et un indice de fluidité à chaud MFR L (ISO 1133, condition L, c'est-à-dire 230 °C et charge de 2,16 kg) de 0,5 à 100 g/10 min. ;

(III) une composition de polypropylène comprenant :

a3) 20 à 60 % en poids d'un copolymère de propylène hétérophasique
b3) 5 à 33 % en poids d'un homopolymère ou d'un copolymère de propylène, le copolymère comprenant jusqu'à 5 % en poids d'une alpha-oléfine choisie parmi l'éthylène, le 1-butène, le 1-hexène et le 1-octène ;
c3) 2 à 15 % en poids d'un copolymère séquencé élastomère comprenant du styrène ;
d3) 4 à 32 % en poids d'un copolymère élastomère d'éthylène ;
e3) 5 à 50 % en poids d'une charge inorganique, de préférence du verre ;
f3) 0,1 à 5 % en poids d'un agent de compatibilité,
les quantités des constituants a3), b3), c3), d3), e3) et f3) se rapportant au poids total de a3), b3), c3), d3), e3) et f3), ce qui représente 100 % et l'indice de fluidité à chaud MFR (230 °C, charge de 2,16 kg, mesuré selon la norme ISO 1133-2:2011) de la composition de polypropylène étant d'au moins 1,0 g/10 min; et

(IV) leurs combinaisons.

**14.** Procédé de fabrication additive basé sur une extrusion selon l'une quelconque des revendications 10 à 13, le polymère thermoplastique (P) étant introduit dans le dispositif d'impression 3D sous la forme d'un filament ou d'une pastille.

**15.** Kit d'impression 3D comprenant :

(K1) un matériau thermoplastique (P) approprié pour une fabrication additive basée sur une extrusion ; et
(K2) une plaque d'impression comprenant ou constituée d'un film ou d'une feuille selon l'une quelconque des revendications 1 à 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018065243 A
- WO 2018065244 A
- EP 45977 A2
- EP 395083 A2
- WO 98056830 A
- WO 98056833 A
- WO 98056834 A
- WO 0055215 A
- WO 0063261 A
- WO 2010078494 A
- US 7388061 B
- EP 361493 A
- EP 728769 A
- WO 02100904 A
- WO 0757160 A
- WO 2011061134 A
- US 4399054 A
- US 4469648 A
- WO 9844009 A1
- EP 1012195 A
- EP 0572028 A1
- WO 2020169423 A
- EP 2020077033 W
- EP 2020077034 W

**Non-patent literature cited in the description**

- **C. J. CARMAN** ; **R. A. HARRINGTON** ; **C. E. WILKES**. *Macromolecules*, 1977, vol. 10 (3), 536
- **M. KAKUGO** ; **Y. NAITO** ; **K. MIZUNUMA** ; **T. MIYATAKE**. *Macromolecules*, 1982, vol. 16 (4), 1160